Europäisches Patentamt

European Patent Office

Office européen des brevets

(19)

(11) Publication number: **0 343 293 B1**

# EUROPEAN PATENT SPECIFICATION

(12)

(45) Date of publication of patent specification: **12.08.92**  (51) Int. Cl.[5]: **B01J 31/12**

(21) Application number: **88304756.5**

(22) Date of filing: **25.05.88**

(54) Method of making molybdenum/alkylene complexes useful as epoxidation catalysts.

(43) Date of publication of application:
**29.11.89 Bulletin  89/48**

(45) Publication of the grant of the patent:
**12.08.92 Bulletin  92/33**

(84) Designated Contracting States:
**BE DE FR GB NL**

(56) References cited:
**EP-A- 0 181 749
EP-A- 0 192 895
EP-A- 0 193 682
EP-A- 0 264 184
US-A- 4 009 122**

(73) Proprietor: **TEXACO DEVELOPMENT CORPO-
RATION
2000 Westchester Avenue
White Plains, New York 10650(US)**

(72) Inventor: **Marquis, Edward Thomas
9004 Collinfield Drive
Austin Texas 78758(US)**
Inventor: **Payton, Howard Franklin
11101 Bluff Bend
Austin Texas 78761(US)**

(74) Representative: **Brock, Peter William et al
UROUHART-DYKES & LORD 91 Wimpole
Street
London W1M 8AH(GB)**

Rank Xerox (UK) Business Services

EP 0 343 293 B1

## Description

The invention relates to a method for making molybdenum compounds and more particularly relates to an improved method for making molybdenum alcohol complexes useful as olefin epoxidation catalysts.

The epoxidation of olefins to give various epoxide compounds has long been studied by those skilled in the art. It is well known that the reactivities of the various olefins differs with the number of substituents on the carbon atoms involved in the double bond. Ethylene itself has the lowest relative rate of epoxidation, with propylene and other alpha olefins being the next slowest. Compounds of the formula $R_2C = CR_2$, where R simply represents alkyl or other substituents, may be epoxidized fastest. Thus, the more substituents on the double bond carbons, the easier it is to epoxidize across that bond.

The production of ethylene oxide from ethylene has long been accomplished by reaction with molecular oxygen over a silver catalyst. Numerous patents have issued on various silver-catalyzed processes for the production of ethylene oxide. Unfortunately, the silver catalyst route has not been commercialized for olefins other than ethylene. For a long time the commercial production of propylene oxide could only be accomplished via the cumbersome chlorohydrin process.

Another commercial process for the manufacture of substituted oxides from alpha olefins such as propylene was not discovered until John Kollar's work in the 1960s. His U. S. Patent 3,351,635 taught that an organic oxide compound could be made by reacting an olefinically unsaturated compound with an organic hydroperoxide in the presence of a molybdenum, tungsten, titanium, columbium, tantalum, rhenium, selenium, chromium, zirconium, tellurium or uranium catalyst. Kollar's U. S. Patent 3,350,422 teaches a similar process using a soluble vanadium catalyst.

However, even though Kollar's work was recognized as extremely important in the development of a commercial propylene oxide process that did not depend on the chlorohydrin route, it has been recognized that Kollar's catalytic route (in which molybdenum is the preferred catalyst) has a number of problems. For example, large quantities of the alcohol corresponding to the peroxide used were formed. When t-butyl hydroperoxide is used as a co-reactant, essentially equimolar amounts of the olefin epoxide and t-butyl alcohol are formed. Other troublesome by-products were the olefin oligomers. If propylene is the olefin to be epoxidized, various propylene dimers, sometimes called hexenes, are usually formed. Besides being undesirable in that this is not the desired use of propylene, problems are caused in separating the desired propylene oxide from the product mix. In addition, the molybdenum catalyst may not be stable or the recovery of the catalyst for recycle may be poor.

Various avenues of investigation have been explored in attempts to improve on the molybdenum-catalyzed epoxidation of propylene. One technique was to try to improve on the catalyst itself. Patents which cover the preparation of various molybdenum epoxidation catalysts include U. S. Patent 3,362,972 to Kollar. There a hydrocarbon soluble salt of molybdenum or vanadium may be made by heating a molybdenum compound in which molybdenum has a valence of +6, or a vanadium compound in which vanadium has a valence of +5, with a carboxylic acid of from 4 to 50 carbon atoms having at least 4 carbon atoms per carboxylic group. U. S. Patent 3,578,690 to Becker discloses that molybdenum acid salts may be made by directly reacting a carboxylic acid with a molybdenum compound while removing the water that is formed.

The reaction of molybdenum trioxide with monohydric saturated alcohols having 4 to 22 carbon atoms or with a mono- or polyalkylene glycol monoalkyl ether or mixtures thereof to make olefin epoxidation catalysts is described in U. S. patent 3,480,563 to Bonetti, et al. These catalysts have only 0.07 to 0.93% molybdenum, which is a molybdenum content undesirably too low for commercial use. Bonetti, et al. do not realize the importance of the ratio of alcohol to molybdenum compound reactants with respect to maximizing molybdenum content yet providing a soluble, active epoxidation catalyst. They also do not indicate any benefit from adding ammonium hydroxide to the preparation, an important factor discovered when molybdenum trioxide is reacted with 2-ethyl-1-hexanol.

In U. S. Patent 4,434,975 to ARCO, investigators found that molybdenum catalysts could be made from saturated alcohols or glycols having one to four carbon atoms, such as ethylene glycol and propylene glycol, by reacting them with molybdenum metal and an organic hydroperoxide, peroxide, or $H_2O_2$. Molybdenum compounds prepared by reacting an ammonium-containing molybdate with a hydroxy compound, for example, an organic primary or secondary alcohol, a glycol or a phenol, are described in U. S. Patents 3,784,482 and 3;787,329 to Cavitt.

Further, U. S. Patent 3,573,226 to Sorgenti discloses that molybdenum-containing epoxidation catalyst solutions may be made by heating molybdenum powder with a stream containing unreacted tertiary butyl hydroperoxide and polyhydric compounds of from about 200 to 300 molecular weight and having from 4 to 6 hydroxyl groups per molecule. These catalysts are used for the epoxidation of propylene according to U.

S. Patent 3,666,777 to Sorgenti.

U. S. Patent 3,953,362 to Lines, et al. reveals that novel molybdenum epoxidation catalysts may be prepared by reacting an oxygen-containing molybdenum compound with hydrogen peroxide and an amine and optionally water or an alkylene glycol at elevated temperatures. Similar catalysts are prepared by reacting an oxygen-containing molybdenum compound with an amine and an alkylene glycol at elevated temperatures according to U. S. Patent 4,009,122 also to Lines, et al.

U. S. Patent to Mattucci, et al. also concerns molybdenum glycol catalysts prepared from molybdenum acetyl acetonate and isolated as solids. When the materials are used as epoxidation catalysts, they must be employed in solution with a hydrocarbon solvent. Molybdenum derivative compounds also useful as epoxidation catalysts may be prepared by reacting an oxygen-containing molybdenum compound such as molybdenum acetylacetonate, molybdic acids and molybdenum oxides with an organic compound having vicinal hydroxyl groups in the presence of a hydrohalic acid such as hydrofluoric acid, hydrochloric acid and the like, according to U. S. Patent 3,991,090 to Hagstrom, et al.

Marquis, et al. U. S. Patent 4,626,596, dated December 2, 1986, and entitled "Synthesis of Molybdenum/Alkylene Glycol Complexes Useful as Epoxidation Catalysts" discloses a method of making catalytically active molybdenum complexes wherein a reaction mixture consisting essentially of an undiluted alkylene glycol, such as propylene glycol and an undiluted ammonia-containing molybdenum compound such as ammonium heptamolybdate tetrahydrate mixed in the ratio of 7 to 20 moles of alkylene glycol per gram atom of molybdenum is heated at 80° to 130°C, in the presence of a minor amount of water followed by a mild stripping of the reaction product to provide a molybdenum complex having a final water content of about 0.5 to 6 wt.%.

Marquis, et al. U. S. Patent 4,654,427 entitled "Synthesis of Molybdenum Oxide/Alkanol Complexes" discloses a process wherein a $C_6$-$C_{13}$ alkanol such as 2-ethyl-1-hexanol is reacted with a molybdenum oxide, such as molybdenum trioxide by a process which is initiated in the presence of aqueous ammonium hydroxide and conducted at 120° to 190°C for 3 to 8 hours to substantially completely remove evolved ammonia and water to provide a liquid reaction product of the molybdenum/alkanol complex dissolved in unreacted alkanol.

Marquis, et al. U. S. Patent 4,650,886 entitled "Synthesis of Ammonium Molybdate/Alkanol Complexes" is directed to a process wherein a controlled amount of a $C_6$ to $C_{13}$ alkanol, such as 2-ethyl-1-hexanol is reacted with an ammonium molybdate such as ammonium heptamolybdate tetrahydrate in the presence of water at atmospheric pressure at a temperature of 120° to 190°C for 3 to 8 hours to substantially completely remove evolved ammonia and water to provide a liquid reaction product containing less than 0.1 wt.% of water and composed of the molybdenum/alkanol complex dissolved in unreacted alkanol.

There still exists a need for an epoxidation catalyst that is stable, easy to prepare, and has a high molybdenum content.

This invention is directed to an improved method of making molybdenum complexes by reacting an ammonium-containing molybdenum compound with an alkylene glycol at subatmospheric pressure at a temperature ranging from about ambient (e.g., 25°C) to not more than 150°C.

Marquis, et al. U. S. Patent 4,626,956 discloses an improved method for making molybdenum/alkylene glycol complexes based, in part, on the discovery that the ratio of alkylene glycol reactant to molybdenum compound has an effect on the ease of filterability of the finished reaction mixture and the stability of the finished complex solution with respect to staying clear and solids-free over extended periods of time. It was also discovered that the actual molybdenum complex preparation history is very important in determing if the final complex is good or poor in its final application as an epoxidation catalyst. It was further discovered in the case of molybdenum complexes made from EG (ethylene glycol) or PG (propylene glycol) used as epoxidation catalysts, that the reaction temperature should not be too high (165 to 180°C) as this results in low molybdenum contents in the complexes and the formation of large quantities of solids. Also, for complexes useful as epoxidation catalysts, the high molybdenum content must be achieved by adjusting the ratio of glycol to gram atoms of molybdenum, not by distilling off the glycol. If glycol is distilled off to concentrate the molybdenum content of the complex, the water content of the complex will become too low and the complex will perform poorly as an epoxidation catalyst in that the selectivity based on the organic hydroperoxide consumed will be poor. The preferred procedure of U. S. Patent 4,626,956 involves establishing the ratio of moles of glycol to gram atoms molybdenum in the 8:1 to 16:1 range which produces an essentially solids-free reaction mixture after digestion one hour at 90 to 120°C. Next, vacuum stripping is conducted to remove water, ammonia, etc., so that the remaining bottoms are 80 to 95 wt.% of the charge.

It has been discovered in accordance with the present invention that molybdenum/ethylene glycol complexes substantially identical to the molybdenum/ethylene glycol complexes of Marquis, et al. U. S.

Patent 4,626,596 can be prepared rapidly and effectively by a streamlined subatmospheric preparation process which comprises:

preparing a feed mixture by mixing essentially undiluted ethylene glycol with essentially undiluted ammonium dimolybdate in a reaction vessel at a temperature of 20 to 30°C and at atmospheric pressure, such that the ratio of moles of ethylene glycol to gram atoms of molybdenum ranges from 7:1 to 20:1, characterised in that said feed mixture is heated to a temperature of 25°C to 150°C while simultaneously reducing the pressure to a pressure of 5 to 150 mm of Hg over a period of time ranging from 5 to 60 minutes with agitation while removing volatilized reaction byproducts, and

holding said mixture at said temperature and subatmospheric pressure conditions established previously for a period of time of 2 to 30 minutes sufficient to complete the complex formation reaction, as evidenced by the formation of a solids free solution of said complex in said unreacted ethylene glycol,

thereafter returning said reaction mixture to said initial conditions of temperature and pressure and

recovering an essentially solids free, clear catalytically active solution of a molybdenum/ethylene glycol complex in unreacted ethylene glycol having a molybdenum content of 10 to 15 wt.% of molybdenum.

The recovered complex preferably contains from 0.5 to 5 wt.% of water. Preferably, the mixture is heated at 25°-120°C at a pressure of 10 to 80 mm of Hg for 10 to 50 minutes and held at that temperature for 4 to 25 minutes. Still more preferably, the mixture is heated at 25-100°C and a pressure of 15-60 mm of Hg for 15 to 40 minutes and held at that temperature for 6 to 20 minutes.

The molybdenum starting material for the present invention is ammonium dimolybdate.

Ethylene glycol is the other co-reactant used to make the molybdenum complexes of this invention.

The ratio of glycol (moles of ethylene glycol) to gram atoms of molybdenum in the ammonium dimolybdate is important in determining the amount of molybdenum that will be present in the final complex and the ease of processing.

For the ethylene glycol/ammonium dimolybdate system of the present invention, the preferred range of moles of glycol to gram atoms of molybdenum is 9:1 to 11:1. To provide the best complex in terms of molybdenum content, ease of processing and stability upon standing, the proportion of water remaining in the complex should be in the range of 0.5 to 5 wt.%. The reaction temperature to make the inventive complexes should preferably be between 25 to 120°C, and the final pressure should be a subatmospheric pressure of preferably 10 to 80 mm of Hg.

The pressure on the reaction mixture should be reduced simultaneously with the heating of the reaction mixture to the desired final temperature, and this step should preferably be performed over a period of 10 to 50 minutes. The holding time for the reaction mixture at the final temperature need not be prolonged, and holding times of 7 to 13 minutes have been found to be adequate (see Examples 1, 2 and 3). Generally, no filtration is required for the best complex of this invention. Sufficient overhead is removed during the reaction so that the complex bottoms amount to 85 to 95 wt.% of the charge and the water content of the catalyst is preferably in the 0.5 to 5.0 wt.% range. Generally, the water content of the final complex should be between 1 and 3 wt.%, particularly for epoxidation purposes.

The reaction mixture that is formed by the above described process is a clear, essentially solids-free solution of a molybdenum/ethylene glycol complex in unreacted ethylene glycol and may be recovered and used without filtration. The solutions are storage-stable, catalytically active materials having a dissolved molybdenum content of 10 to 15 wt.% and preferably a water content of 0.5 to 5.0 wt.%. When prepared by the preferred operating procedure, the solutions will normally contain 11 to 14 wt.% of molybdenum, 1 to 3 wt.% of water and will constitute 88-95 wt.%, preferably 90-92 wt.% or more of the combined weight of the charge materials.

Since the molybdenum/ethylene glycol complexes of this invention titrate as acids, even though they have no free additional acidic groups, such as carboxylic acid groups, their use as acid catalyst substitutes seems likely. For example, the instant complexes may be useful cyclization catalysts for splitting out water such as in the production of tetrahydrofuran from 1,4-butane diol and the manufacture of triethylenediamine from hydroxyethylpiperazine. The complexes of this invention might be used as catalysts for hydroxylations such as the production of resorcinol from toluene in the presence of a hydroperoxide, carbonate formations from olefins, carbon dioxide and a hydroperoxide, and oxygenate formations from hydrocarbons and organic hydroperoxides. Other catalytic uses for these complexes include condensations, dehydrations, esterifications, oligomerizations, polymerizations, disproportionations and rearrangements other than those mentioned. The molybdenum/glycol complexes could also be tried as corrosion inhibitors in antifreeze formulations and as direct additives to oils, greases and other lubricating fluids.

The molybdenum/ethylene glycol solutions of the present invention are most suitably used as epoxidation catalysts. Before addition to the epoxidation reaction mixture, the complex-catalyst solution is usually premixed with one of the reactants typically the hydroperoxide, such as a t-butyl alcohol (TBA) solution of t-butyl hydroperoxide (TBHP).

It is well known that soluble molybdenum complexes efficiently catalyze the epoxidation of propylene to propylene oxide in the presence of t-butyl hydroperoxide. The alkylene glycol/molybdenum complexes of this invention surprisingly give selectivities to propylene oxide in such reactions on the order of 98 to 99% and higher at TBHP conversions of about 98 to 98.4% while providing minimal propylene dimer production and very low methyl formate production.

The epoxidations are typically conducted by reacting an olefin with an organic hydroperoxide in the presence of the catalyst and a solvent. Preferably, the olefin is propylene and the hydroperoxide is TBHP. With these reactants, the desired products are propylene oxide (PO) and t-butyl alcohol.

Preferably, the catalyst concentration is from 200 to 600 ppm based on the combination of the olefin and the organic hydroperoxide. Further, the reaction should be conducted at a temperature in the range of 50 to 180°C, preferably 90 to 140°C and especially in the range of about 100 to 130°C. This reaction temperature is relatively low as compared with other commercial techniques. Another unusual aspect is that the preferred mole ratio of olefin to hydroperoxide is unusually low; on the order of from about 0.9:1 to 3.0:1.

Another preferred embodiment of the epoxidations involves conducting the reaction in two stages, approximately equal in length, with the first stage at a lower temperature than the second stage. For instance, the first hour of reaction would preferably be conducted at a temperature in the range of 50 to 120°C followed by the second and last hour of reaction at about 120 to 150°C.

The invention will be further illustrated by the following examples, which are given by way of illustration and not as limitations on the scope of this invention as defined by the appended claims.

## SPECIFIC EXAMPLES

### Example 1: 9/1 Ratio Moles EG/g Atoms Mo, 20 Minutes  Total Preparation Time (6032-25)

To a 500-ml round bottomed flask equipped with magnetic stirrer, thermometer, K-head and condenser was added 191.6g EG (3.0903 moles) and 58.4g ammonium dimolybdate (ADM, 0.3435g atoms Mo). Mole ratio of EG/g atoms Mo was 9/1. The stirrer was started and a vacuum pulled simultaneously with starting heating. Heating began at 9:15 (25°C) and at a 30 mm. Hg vacuum. At 9:27 (12 minutes later) the temperature had reached 100°C (40 mm vacuum). The reaction mixture was light yellow in color with a few solids. Heating at 100°C continued for only 8 minutes more (40 mm --> 25 mm) till the reaction mass cleared up - no solids. Heat turned off. Reaction mixture was clear upon cooling - no solids. The entire catalyst preparation took only 20 minutes from heat-up till end of reaction. The overhead in the receiver flask weighed 16.5g (35.5% water) and the cold trap weighed 1.4g (87.5% water). The product weight was 227.2g (90.88% of charge). The product contained 14.0% molybdenum by AA, 2.27% water (Karl Fischer), 1.10% $N_2$ by Kjeldahl, and had an acid number of 168.17 mg KOH/gram sample.

### Example 2: 10/1 Ratio Moles EG/g Atoms Mo, 23 Total  Minutes Preparation Time (6032-24)

To a flask equipped as above in Example 1 was added 196.2g EG (3.16452 moles) and 53.8g ADM (0.3165g atoms moly). Mole ratio of EG/g atoms Mo was 10.0/1. The stirrer started and heating and vacuum began simultaneously. Heating began at 7:55 a.m. and the temperature was 23°C and the reaction mixture reached 100°C in only 10 minutes (40 mm). The reaction mixture was light yellow with some solids. Heating was continued at 100°C for another 13 minutes during which time the vacuum improved from 40 mm to 25 mm and the reaction mixture cleared up - no solids. The entire catalyst preparation took only 23 minutes from the initial heat up to cool down. The overhead weighed 15.7g (37.9% water). The cold trap weighed 1.6g (89.83% water). The product weighed 228.1g (91.24% of charge). The product contained 13.2% Mo and 1.06% water, and 1.16% $N_2$, and had an acid number of 159.24 mg KOH/g of sample.

### Example 3: 11/1 Ratio Moles EG/g Atoms Mo, 20 Total  Minutes Preparation Time (6032-26)

To a flask equipped as above in Example 1 was added 200.1g EG (3.2274 moles) and 49.9g of ADM (0.2935g atoms Mo). The mole ratio of EG/g atoms Mo was 11.0/1. The stirrer was started and heating and vacuum began at 10:40 a.m. (24°C). At 10:53 a.m. the reaction mixture reached 100°C (35 mm) - 13 minutes had elapsed since heating started. The reaction mixture was held at 100°C for an additional seven minutes at 100°C with the vacuum improving from 35 mm to 30 mm. At this point the reaction mixture was cooled and found free of solids. The entire heat up and reaction time consumed 20 minutes. The overhead weighed 14.9g (37.68% water). The cold trap weighed 1.2g (87.47% water). The product weight was 229.7g. The product contained 11.8% molybdenum (by AA analysis), 2.81% water, 1.09% $N_2$ and had an acid number of 140.65 mg KOH/g sample.

Example 4 (Comparative): 9/1 Ratio Moles EG/g Atoms Mo; Solids Still Present; 175 Minutes Total Preparation Time (5990-31)

To a 500 ml round bottomed flask equipped with mechanical stirrer, thermometer, $N_2$ inlet, K-head, condenser and receiver flask was added 191.6g EG (3.0903 moles) and 58.4g ammonium dimolybdate (ADM, 0.3435 g atoms Mo). The mole ratio of EG/g atoms Mo was 9/1. The reactants were added to the flask and heat turned on at 8:00 a.m. Atmospheric pressure, nitrogen padded. The reaction mixture reached 100°C at 8:20 a.m. and was milky in color (20 minutes elapsed). The reaction mixture was held at 100°C for 1.0 hour (till 9:20 a.m., solids still present) and cooled to 60°C (10:35 a.m.) at which time a vacuum was pulled (35 mm) and reheating to 100°C begun - at 10:47 a.m. (45 mm) the reaction temperature reached 100°C and the reaction mixture held at 100°C under vacuum (45 mm) for an additional 8 minutes (till 10:55 a.m.). The catalyst preparation was cooled at this point and found to be clear - no solids. From initial heat up to cool down the preparation required 2 hours and 55 minutes (175 minutes). The overhead weighed 9.5g (49.85% water). The cold trap weighed 1.0g (92.42% water) and the product weighed 234.7g (93.88% of the charge). The product was analyzed and found to contain 13.5% molybdenum, 1.21% $N_2$, 2.32% water, and have an acid number of 164.91 mg KOH/g sample.

Example 5 (Comparative): 10/1 Ratio Moles EG/g Atoms Mo, 100 Minutes Total Preparation Time (5990-38)

To a flask equipped as above in Example 4 was added 196.2g EG (3.164 moles) and 53.80g ADM (0.3165g atoms Mo). The mole ratio of EG/g atoms Mo was 10/1. The reactants were added to the flask at 10:55 a.m. and the heat turned on (atmospheric pressure, $N_2$ pad). The reaction mixture reached 100°C at 11:10 a.m. (15 minutes) and heating at 100°C was continued for 1.0 hour until 12:10 p.m. and then cooled rapidly to 85°C in five minutes (total time elapsed 1 hour, 20 minutes). The reaction mixture was reheated to 100°C under vacuum (45 mm initially) and reached 100°C in only 10 minutes (30 mm), it was further held at 100°C for 10 minutes under vacuum (30 mm) and then cooled. It was solids free. The final cooling began at 12:35 p.m. From initial heat up to cool down, this preparation required 1 hour and 40 minutes (100 minutes). The overhead weighed 13.6g (49.39% water) and the cold trap weighed 1.9g (92.96% water). The product weighed 229.9g (91.96% of charge). The product was analyzed and found to contain 13.2% molybdenum, 1.07% nitrogen, 1.54% water and have an acid number of 156.81 mg KOH/g sample.

Example 6 (Comparative) : 11/1 Ratio Moles EG/g Atoms Mo, 118 Minutes Total Preparation Time (5990-47)

To a flask equipped as above in Example 4 was added 200.12g EG (3.228 moles) and 49.88g ADM (0.3074g atoms Mo). The mole ratio EG/g atoms Mo was 11.0/1. The reactants were added to the flask at 7:35 a.m. and heating began (23°C, $N_2$ pad, atmospheric pressure). At 7:55 a.m. (20 minutes) the reaction mixture reached 100°C and was held there at 100°C for 1.0 hour (8:55 a.m.) before cooling rapidly to 65°C (required 15 minutes - now 9:10 a.m.) At 65°C the vacuum was established (35 mm) and heating began (9:10 a.m.) - the reaction mixture reached 100°C some 13 minutes later (9:23 a.m.) and the vacuum was improved to 25 mm. The reaction mixture was held an additional 10 minutes at 100°C (25 mm vacuum) and examined (9:33 a.m.) and found solids free and final cooled. Total preparation time from initial heat up to cool down was 1 hour and 58 minutes (118 minutes). The overhead weighed 14.3g (40.50% water) and the cold trap weighed 1.9g (91.93% water). The product weighed 229.2g (91.68% of charge) and was analyzed and found to contain 11.9% molybdenum (by AA, theory = 12.29%), 0.92% nitrogen, 1.24% water, and have an acid number of 143.44 mg KOH/g sample.

TABLE I

Laboratory Catalyst Preparation - Preparation Procedure Study -
Catalysts Made from Ammonium Dimolybdate and Ethylene Glycol

Ammonium Dimolybdate (Climax)  $(NH_4)_2MO_2O_7$  % Moly = 56.47%

| Example NB Run# | ROH | G. ROH | M.ROH | G.ADM | GA.MO | MR. A/M | Rxn Temp °C | Rxt Hrs | Total Time of Cat. Prepn. Minutes | % Moly | % $N_2$ | % $H_2O$ | Acid # | % MOIN | Comments & Observations (Theoretical % Moly) |
|---|---|---|---|---|---|---|---|---|---|---|---|---|---|---|---|
| 1 6032-25 | EG | 191.52 | 3.081 | 58.38 | .3435 | 9.00 | --- | --- | 20 min | 14.0 | 1.10 | 2.27 | 168.17 | 96.5 | Not Filtered B = 90.9% 14.51 |
| (No Digestion Step - Heat/Pull Vac Simultaneously) | | | | | | | | | | | | | | | |
| 4 5990-31 | " | " | " | " | " | " | 100 | 1.0 | 175 min | 13.5 | 1.21 | 2.32 | 164.91 | 96.1 | Not Filtered B = 93.9% 14.05 |
| 2 6032-24 | EG | 196.20 | 3.164 | 53.80 | .3165 | 10.00 | --- | --- | 23 min | 13.2 | 1.16 | 1.06 | 159.24 | 99.1 | Not Filtered B = 91.2% 13.32 |
| (No Digestion Step - Heat/Pull Vac Simultaneously) | | | | | | | | | | | | | | | |
| 5 5990-38 | " | " | " | " | " | " | 100 | 1.0 | 100 min | 13.2 | 1.07 | 1.54 | 156.81 | 99.9 | Not Filtered B = 92.0% 13.21 |
| 3 6032-26 | EG | 200.12 | 3.228 | 49.88 | .2934 | 11.00 | --- | --- | 20 min | 11.8 | 1.09 | 2.81 | 140.65 | 96.2 | Not Filtered B = 91.9% 12.27 |
| (No Digestion Step - Heat/Pull Vac Simultaneously) | | | | | | | | | | | | | | | |
| 6 5990-47 | " | " | " | " | " | " | 100 | 1.0 | 118 min | 11.9 | 0.92 | 1.24 | 143.44 | 96.8 | Not Filtered B = 91.7% 12.29 |

Examples 1-3 represent improved, shorter procedure.
Examples 4-6 represent older, established procedure developed by us
(see, for example, U. S. Patent No. 4,626,596).

Claims

1. A method for preparing a catalytically active molybdenum complex which comprises: preparing a feed mixture by mixing essentially undiluted ethylene glycol with essentially undiluted ammonium dimolybdate in a reaction vessel at a temperature of 20 to 30°C and at atmospheric

EP 0 343 293 B1

pressure, such that the ratio of moles of ethylene glycol to gram atoms of molybdenum ranges from 7:1 to 20:1, characterised in that said feed mixture is heated to a temperature of 25°C to 150°C while simultaneously reducing the pressure to a pressure of 5 to 150 mm of Hg over a period of time ranging from 5 to 60 minutes with agitation while removing volatilized reaction byproducts, and

holding said mixture at said temperature and subatmospheric pressure conditions established previously for a period of time of 2 to 30 minutes sufficient to complete the complex formation reaction, as evidenced by the formation of a solids free solution of said complex in said unreacted ethylene glycol,

thereafter returning said reaction mixture to said initial conditions of temperature and pressure and

recovering an essentially solids free, clear catalytically active solution of a molybdenum/ethylene glycol complex in unreacted ethylene glycol having a molybdenum content of 10 to 15 wt.% of molybdenum.

**2.** A method as claimed in claim 1 wherein:

the mole ratio of ethylene glycol to gram atoms of molybdenum in the initial reaction mixture is within the range of 9 to 11,

the reaction mixture, over a period of time ranging from 10 to 50 minutes, is heated to a temperature of 25 to 120°C while the pressure is simultaneously reduced to 10 to 80 mm of Hg and

the reaction mixture is then brought back to ambient conditions of temperature and pressure,

wherein the evolved reaction products removed overhead constitute 8 to 10 wt.% of the charge mixture and

wherein the final solution contains 11 to 14 wt.% of molybdenum.

**3.** A method as claimed in claim 1 or claim 2 wherein the feed mixture is heated to a temperature of 25° to 100°C while simultaneously reducing the pressure to from 15 to 60 mm Hg for 15 to 40 minutes.

**4.** A method as claimed in any one of claims 1 to 3 wherein the recovered complex constitutes from 88 to 95 wt.% of the charge mixture.

**5.** A method as claimed in claim 4 wherein the recovered complex contains from 0.5 to 5 wt.% water.

**6.** A method as claimed in claim 1 wherein:

the ratio of moles of ethylene glycol to gram atoms of molybdenum ranges from 9 to 11,

the feed mixture is heated to a temperature of 25° to 100°C over a period of 10 to 50 minutes while simultaneously reducing the pressure to from 15 to 60 mm Hg and

the mixture is held at the temperature and pressure established previously for 6 to 20 minutes

said recovered complex constitutes 90 to 92 wt.% of the charge mixture and contains 11 to 14 wt.% of molybdenum.

**Revendications**

**1.** Une méthode de préparation d'un complexe de molybdène à activité catalytique qui comprend :

la préparation d'un mélange d'alimentation en mélangeant de l'éthylène glycol essentiellement non dilué avec du dimolybdate d'ammonium essentiellement non dilué dans un récipient de réaction à une température de 20 à 30 °C et sous pression atmosphérique, de façon que le rapport entre les moles d'éthylène glycol et les moles d'atomes de molybdène se situe dans la fourchette de 7:1 à 20:1, caractérisée en ce que ledit mélange d'alimentation est porté à une température de 25 °C à 150 °C tout en réduisant simultanément la pression à une pression de 5 à 150 mm de Hg sur une durée allant de 5 à 60 minutes sous agitation tout en extrayant les sous-produits réactifs volatilisés, et

le maintien dudit mélange à ladite température et dans les conditions de pression atmosphérique établies auparavant pendant une durée de 2 à 30 minutes suffisante pour achever la réaction de formation de complexe, ce qui est mis en évidence par la formation d'une solution sans matières solides dudit complexe dans ledit éthylène glycol inaltéré,

puis le retour dudit mélange réactif auxdites conditions initiales de température et de pression et

l'obtention d'une solution à activité catalytique claire, essentiellement sans matières solides d'un complexe de molybdène-éthylène glycol dans de l'éthylène glycol inaltéré ayant une teneur en molybdène de 10 à 15 % en poids de molybdène.

8

**2.** Une méthode telle que revendiquée dans la revendication 1 dans laquelle :

le rapport molaire entre l'éthylène glycol et les moles d'atomes de molybdène dans le mélange réactif initial est compris entre 9 et 11,

le mélange réactif, sur une durée allant de 10 à 50 minutes, est porté à une température de 25 à 120 °C tandis que la pression est simultanément réduite de 10 à 80 mm de Hg et

le mélange réactif est ensuite ramené à des conditions ambiantes de température et de pression,

dans laquelle les produits réactifs dégagés, le produit du dessus extrait constituent 8 à 10 % en poids du mélange de charge et

dans laquelle la solution finale contient 11 à 14 % en poids de molybdène.

**3.** Une méthode telle que revendiquée dans la revendication 1 ou la revendication 2 dans laquelle le mélange d'alimentation est porté à une température de 25 ° à 100 °C tout en réduisant simultanément la pression de 15 à 60 mm Hg pendant 15 à 40 minutes.

**4.** Une méthode telle que revendiquée dans l'une quelconque des revendications 1 à 3 dans laquelle le complexe récupéré constitue de 88 à 95 % en poids du mélange de charge.

**5.** Une méthode telle que revendiquée dans la revendication 4 dans laquelle le complexe récupéré contient de 0,5 à 5 % en poids d'eau.

**6.** Une méthode telle que revendiquée dans la revendication 1 dans laquelle :

le rapport entre les moles d'éthylène glycol et les moles d'atomes de molybdène se situe de 9 à 11,

le mélange d'alimentation est porté à une température de 25 ° à 100 °C sur une durée de 10 à 50 minutes tout en réduisant simultanément la pression de 15 à 60 mm Hg et

le mélange est maintenu à la température et à la pression établies auparavant pendant 6 à 20 minutes

ledit complexe récupéré constitue 90 à 92 % en poids du mélange de charge et contient 11 à 14 % en poids de molybdène.

**Patentansprüche**

**1.** Verfahren zur Herstellung eines katalytisch aktiven Molybdän-Komplexes, das folgendes umfaßt:

Herstellung einer Einsatzmischung durch Vermischen von im wesentlichen unverdünntem Ethylenglykol mit im wesentlichen unverdünntem Ammoniumdimolybdat in einem Reaktionsgefäß bei einer Temperatur von 20 bis 30°C und bei Atmosphärendurch in der Weise, daß das Verhältnis von Molen in Ethylenglykol zu Grammatomen Molybdän im Bereich von 7:1 bis 20:1 liegt, dadurch gekennzeichnet, daß besagte Einsatzmischung auf eine Temperatur von 25°C bis 150°C erhitzt wird, während gleichzeitig unter Rühren der Druck auf einen Druck von 5 bis 150 mm Hg über einen Zeitraum, der im Bereich von 5 bis 60 Minuten liegt, reduziert wird, während verdampfte Reaktions-Nebenprodukte abgezogen werden, und

daß besagte Mischung bei besagten Temperatur- und subatmosphärischen Druckbedingungen, die zuvor aufgebaut worden sind, für einen Zeitraum von 2 bis 30 Minuten gehalten wird, der ausreicht, die Komplexbildungsreaktion abzuschließen, wie durch die Bildung einer feststofffreien Lösung besagten Komplexes in besagtem nicht-umgesetzten Ethylenglykol nachgewiesen wird,

daß anschließend besagte Reaktionsmischung wieder auf besagte anfängliche Temperatur- und Druckbedingungen gebracht wird und

daß eine im wesentlichen feststofffreie, klare katalytisch aktive Lösung eines Molybdän-Ethylenglykol-Komplexes in nicht-umgesetztem Ethylenglykol mit einem Molybdängehalt von 10 bis 15 Gew.-% Molybdän gewonnen wird.

**2.** Verfahren nach Anspruch 1, dadurch gekennzeichnet,

daß das Molverhältnis von Ethylenglykol zu Grammatomen Molybdän in der anfänglichen Reaktionsmischung im Bereich von 9 bis 11 liegt,

daß die Reaktionsmischung über einen Zeitraum, der im Bereich von 10 bis 50 Minuten liegt, auf eine Temperatur von 25 bis 120°C erhitzt wird, während der Druck gleichzeitig auf 10 bis 80 mm Hg reduziert wird, und

daß die Reaktionsmischung dann auf Umgebungsbedingungen von Temperatur und Druck zurückgebracht wird,

wobei die entstandenen Reaktionsprodukte, die über Kopf abgezogen werden, 8 bis 10 Gew.-% der Einsatzmischung darstellen und

die endgültige Lösung 11 bis 14 Gew.-% Molybdän enthält.

3. Verfahren nach Anspruch 1 oder Anspruch 2, dadurch gekennzeichnet, daß die Einsatzmischung auf eine Temperatur von 25° bis 100°C erhitzt wird, während gleichzeitig der Druck auf 15 bis 60 mm Hg für 15 bis 40 Minuten reduziert wird.

4. Verfahren nach einem der Ansprüche 1 bis 3, dadurch gekennzeichnet, daß der gewonnene Komplex 88 bis 95 Gew.-% der Einsatzmischung darstellt.

5. Verfahren nach Anspruch 4, dadurch gekennzeichnet, daß der gewonnene Komplex 0,5 bis 5 Gew.-% Wasser enthält.

6. Verfahren nach Anspruch 1, dadurch gekennzeichnet,

daß das Verhältnis von Molen Ethylenglykol zu Grammatomen Molybdän im Bereich von 9 bis 11 liegt,

daß die Einsatzmischung über einen Zeitraum von 10 bis 50 Minuten auf eine Temperatur von 25° bis 100°C erhitzt wird, während gleichzeitig der Druck auf 15 bis 60 mm Hg reduziert wird und

daß die Mischung für 6 bis 20 Minuten bei der Temperatur und dem Druck, die vorher eingestellt worden sind, gehalten wird,

wobei besagter gewonnener Komplex 90 bis 92 Gew.-% der Einsatzmischung darstellt und 11 bis 14 Gew.-% Molybdän enthält.